# EUROPEAN PATENT APPLICATION

(11) **EP 2 717 020 A1**
(43) Date of publication of application: **09.04.2014**
(21) Application number: 12187084.4
(22) Date of filing: 03.10.2012
(51) Int. Cl.: G01D 4/00

(54) **Repetition of repeated consumption data**

(71) Applicant: KAMSTRUP A/S, 8660 Skanderborg (DK)
(72) Inventor: Christiansen, Johnny Dørken, 8464 Galten (DK); Hald, Flemming, 8370 Hadsten (DK)
(74) Representative: Plougmann & Vingtoft A/S

(57) **Abstract**

The invention is directed to a system for providing data paths from consumption meters (1A-1E, 2A-2E, 3A-3E) to a data collector or concentrator (2). The data path is provided by a communication network which comprises at least two repeater devices (10, 11, 12, 20, 30, 40), and where at least some of the repeater devices are repeated by other repeater devices, i.e. the system comprises repeated repeaters. The consumption meters, or utility meters, are for example electricity meters, heat meters, cooling meters or water meters. The repeater devices stores meter lists of consumption meters to which they act as repeaters. The repeater devices are assigned to one or more other repeater devices, and are arranged to obtain from the assigned repeater devices their meter list, and add the obtained meter lists to its own meter list.

## Description

### FIELD OF THE INVENTION

The present invention relates to communication system for communicating consumption data of a supplied utility, where the communication system comprises at least two repeater devices.

### BACKGROUND OF THE INVENTION

Consumption meters for measuring consumption data of a supplied utility, for example electricity meters, heat meters for district heating, and water meters for cold or hot water, are often equipped with a communication unit for remote communication with the meter, and capabilities of being arranged in a communication network. Arrangement of consumption meters in a communication network greatly facilitates data collection.

Communication networks for consumption meters are typically of a hierarchal type where the communication nodes are arranged in a tree structure, possibly hybridized with a mesh network, and forming a multi-hop network.

In a multi-hop network a number of intermediate transmitters are involved in the transmission of a data signal from a sender (consumption meter) to a receiver (collector). These intermediate transmitters generally act either as router devices or repeater devices. A router device receives a data signal and parses the route information in the data signal or consults a route table to extract route information, and transmits the data signal in an addressed manner to a next device in accordance with the route information. A repeater device retransmits a data signal to extend the transmission range without imposing any specific routing on the message.

If a single repeater is not sufficient to ensure a communication path between the consumption meter and the collector, a second, or even more, repeaters may be used to repeat repeated data signals. Higher level repeaters may repeat data signal from more than one repeater at a lower level. Communication networks for collecting consumption data may comprise a very high number of consumption meters. Communication networks which comprise two or more repeater levels may become quite complex since a high number of data signal are transmitted from a high number of consumption meters and retransmitted a number of times by repeater devices until they reach the destination. It can be a very time consuming process to deploy a consumption meter network with two or more levels of repeaters as well as rearranging an existing consumption meter network with two or more levels of repeaters.

### SUMMARY OF THE INVENTION

It would be advantageous to achieve a system of consumption meters arranged in a communication network which reduces the complexity of deploying and rearranging nodes in large networks. In general, it may be seen as an object of the present invention to provide a solution to the above mentioned problems, or other problems, of the prior art.

To achieve such a system, there is provided, in a first aspect of the invention, a system of a plurality of consumption meters each arranged for measuring consumption data of a supplied utility, and a data collector for collecting the consumption data arranged in a communication network where a data path between a consumption meter and the data collector comprises at least two repeater devices,
wherein a repeater device is arranged to repeat a data signal by receiving the data signal and retransmitting the data signal, where each repeater device stores a meter list of consumption meters assigned to it, and where the repeater device only repeats the data signals originating from a consumption meter comprised on the meter list stored by the repeater device,
wherein the repeater device may further have assigned to it one or more other repeater devices, and wherein the repeater device is arranged to obtain from the one or more other repeater devices the meter list of the one or more other repeater devices, thereby obtaining repeater assigned meter lists,
and wherein the meter list of the repeater devices comprises both the consumption meters assigned to it and the consumption meters obtained from the repeater assigned meter lists.

A system is thereby provided where the data path from the consumption meter to the data collector comprises at least two repeater devices. The at least second repeater device is arranged to repeat data signals from the at least first repeater device. The system thus comprises repeated repeaters.

While many communication meter networks are quite complex in their topology and functionality, there is nevertheless an interest in simple robust systems which are easy to put in operation and which requires a minimum of maintenance. The present invention provides a relatively simple network topology based on repeated repeaters.

The repeater devices stores meter lists of consumption meters to which they act as repeaters. The repeater devices are assigned to one or more other repeater devices, and are arranged to obtain from the assigned repeater devices their meter list, and add the obtained meter lists to its own meter list.

The system is based on repeater devices which each store a meter list of consumption meters assigned to it. The repeater device being properly programmed to only repeat the data signals originating from assigned consumption meter comprised on the meter list stored by the repeater device. By use of such meter lists, it is controlled which repeater devices that are allowed to repeat data signals from which consumption meters. The data path of a data signal is thereby restricted, and multiple copies of the same data signals arising from potential repetition from more than one repeater of the same data signal is controlled. Multiple copies can be removed or allowed to a controlled extend in accordance with network owner desires. Generally it is not desired to have multiple copies of the same data signal propagating in the network.

While the use of meter lists in repeater devices provides a simple, robust and cost-efficient communication network to deploy, it does require some handling of the meter lists.

Each repeater devices can have assigned to it one or more other repeater devices, and the repeater devices are programmed to obtain from the one or more other repeater devices the meter lists of the one or more other repeater devices, so-called repeater assigned meter lists, so that the meter lists in the repeater devices comprise both the consumption meters assigned to the repeater itself and the consumption meters obtained from the repeater assigned meter lists.

In this manner, any changes made in the assignments of the consumption meter to the first level repeater or between repeaters, will automatically be accounted for by all repeaters in the communication path between the consumption meter and the collector. A system which in a cost-efficient manner support changes in a network topology is thereby provided.

In further aspects, the invention relates to a repeater device for repeating radio frequency signals for use in a system of the first aspect, and to a method of operating such a repeater device.

The consumption meter may in embodiments be a charging consumption meter for charging an amount of a supplied utility. The consumption meter may be an energy meter for metering an amount of energy consumed, a heat meter for district heating, a cooling meter for district cooling, a water meter for distributed water, e.g. drinking water, a gas meter, an electricity meter and/or a smart meter. The consumption meter may be a legal meter, i.e. a meter which is subdued to regulatory demands. Such regulatory demands may be demands to the precision of the measurements.

In general the various aspects of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
Fig. 1 schematically illustrates a first embodiment of a wireless AMR network;
Fig. 2 schematically illustrates a second embodiment of a wireless AMR network;
Figs. 3 and 4 illustrate timing signals of repeaters with reference to the network topology of Fig. 1; and
Fig. 5 illustrates a flow chart of steps performed in connection with operating a repeater device.

### DESCRIPTION OF EMBODIMENTS

In general, a data network for remote reading of consumption meters can be build up in a number of ways based on various network structures. For an automatic meter reading (AMR) network or advanced metering infrastructure (AMI) network, the network should be robust, but also relatively cost-efficient to deploy and maintain. AMR/AMI networks are often challenged by the very high number of end-points which report consumption data from the consumption meter to the utility owner, any changes in the network should be handled by the network with a high degree of automation in order for it to be cost-efficient to operate.

Embodiments of the present invention provides a wireless AMR/AMI network which is based on a simple network topology, which employs two or more repeater devices to extend the communication range of the consumption meters to reach the collector device. In embodiments of the present invention, the repeater devices automatically handle changes in the network to a very high degree.

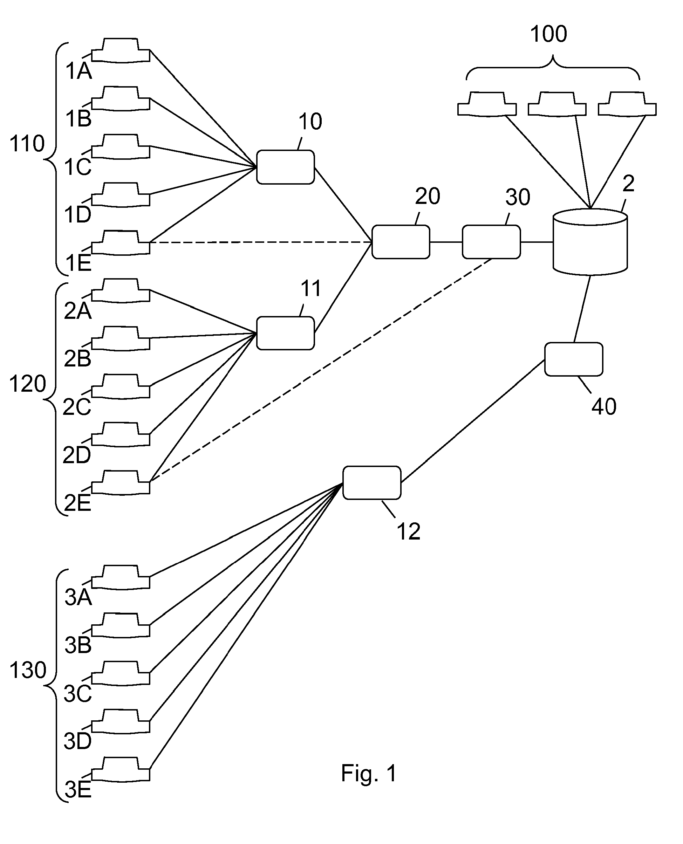

Figure 1 schematically illustrates an embodiment of a wireless AMR/AMI network in accordance with the present invention. The figure shows a number of consumption meters 1-3, e.g. water meters or heat meters, which measure a consumed amount of the supplied utility, e.g. the amount of consumed water or heat of a given household. In order to collect the consumption data from the individual meters, the meters are arranged in a communication network so that the utility remotely can collect the consumption data. To this end, the consumption meters and the repeater devices are equipped with communication circuits or modules capable of transmitting the collected consumption data in the data network. The communication circuit or module of the repeaters comprises a receiver circuit for receiving data messages and a sender circuit for re-transmitting the received data message. The total network is in an embodiment a wireless radio network based on radio signal e.g. in the frequency range between 850 MHz and 950 MHz, such as in the range of 868 to 870 MHz or in the range of 900 MHz to 915 MHz. In general however, the network may be any suitable network operating at any suitable signal frequency. Moreover, the network may be wireless, partly wired or completely wired, such as a power line carrier (PLC) network. Consumption meters arranged in a network, are arranged to transmit data messages in accordance with a given communication protocol, such as the MBus protocol (EN13757), to transmit a data signal comprising a payload in the form of the consumed amount of the given utility. The communication protocol normally defines the frequency range, communication channel, etc.

In an advantageous embodiment, the network between the consumption meters and the first level repeaters is a wireless radio frequency (RF) network. More advantageously, also the network between the repeaters is a wireless RF network. However, any network between the collector and further backend devices may be wired or wireless in accordance with a given setup.

In Fig. 1 the data network is based on a number of repeaters 10, 11, 12, 20, 30, 40 arranged to extend the communication range from each of the consumption meters 1 to the data collector 2. The data collector 2 may be in the form of sub-collector or main collector. The main collector being the collection system of the utility provider, whereas the sub-collector may be a concentrator unit arranged as a concentrator node in the network to collect consumption data from a group of assigned consumption meters.

The consumption meters are typically arranged as utility meters in a residential area for measuring household utility consumption. Such consumption meters are arranged in street level, and wireless communication in a residential area may be hampered by buildings, plants, vehicles, etc. The repeater network may be provided to ensure a communication path from the consumption meters to a collector device arranged as a concentrator node at a location for collecting data for a large number of households and reporting back to the utility owner. Such a collector device may be arranged at a chimney or other high point some distance away from the residential area, whereas the repeater devices are positioned at intermediate appropriate locations, such as in light posts, on building walls, etc.

The network may generally comprise a complex topology, however at least a part of the network, and possibly the entire network, may be a repeater network in the sense that the network between the consumption meters and the data collector consists of repeater devices. That is, for at least a part of the consumption meters, the signal path to the collector includes at least two repeater devices. For this part of the network no other type of devices are present, for example, a router device is not used to direct the data signal to the collector.

In a general embodiment, a high number of consumption meters are present, such as several hundred or even several thousand. In connection with the present invention, the consumption meters are out of communication range with the collector, and at least two repeater devices are needed in order to extend the communication range from the consumption meters to the data collector. Typically, and depending on the communication topology, a higher number of repeater devices are used. Each repeater may serve as repeater for between 1 and 1000 consumption meters. The scope of the invention is however not limited to large systems. It may also beneficially be used for smaller systems, such as systems where a small number of consumption meters are arranged at an isolated and distant location. Moreover, not all consumption meters need be out of range of the collector. In Fig. 1, this is illustrated by the group of consumption meters 100 which are in direct communication range with the collector 2.

In Fig. 1, the repeaters 10, 11, 12 are in direct communication with consumption meters, such direct connected repeaters are first level repeaters. Repeaters 20 in direct communication with first level repeaters 10, 11 are a second level repeaters, and so forth, so that generally a next level repeater is in direct communication with a previous level repeater. The highest level repeater in Fig. 1 is a third level repeater 30, which is also in direct communication with the data collector 2. A repeater may act on different levels repeater for different meters. For example meter 1E may be in direct communication with repeater 20 as well as in indirect communication via repeater 10, the repeater 20 may thus be both a first and a second level repeater for meter 1E depending on the specific communication path of the data signal. In the same manner may meter 2E may be in direct communication with repeater 30 as well as in indirect communication via repeaters 11 and 20, the repeater 30 may thus be both a first and a third level repeater for meter 2E depending on the specific communication path of the data signal. In general repeaters may relate to a number of different levels for different consumption meters. In a communication network which consist of repeaters, normally only a few levels of repeaters are used, such as below 5 levels. However, the number of repeater devices at each level may be quite high. In general, however, more than 5 levels may be used.

In embodiments of the present invention, each consumption meter is directly assigned to one repeater device, in general a consumption meter may be directly assigned to a (small) group of repeater devices to introduce redundancy.

In addition to assigning consumption meters to repeater devices, the repeater devices may further have assigned to it one or more other repeater devices. In Fig. 1, the group of consumption meters with reference numeral 110 is directly assigned to repeater device 10, and so forth with the group 120 to 11, and with the group 130 to 12. The repeater device 20 has assigned to it the repeater devices 10 and 11, whereas the repeater device 30 has assigned to it the repeater device 20, and the repeater device 40 has assigned to it the repeater device 12. The assignments are illustrated by lines between the devices.

An assignment between two repeater devices results in that each repeater device is arranged to obtain the meter list of the repeater device(s) assigned to it, such meter lists are referred to repeater assigned meter lists. Thus repeater device 20, by virtue of its assignments, is arranged to obtain meter lists from repeater devices 10 and 11, and repeater device 30 obtains lists from repeater device 20, and repeater device 40 obtains lists from repeater device 12.

A repeater device is arranged to construct its own meter list to comprise both the consumption meters assigned to it and the consumption meters obtained from the repeater assigned meter lists.

In an embodiment, in connection with deployment of a consumption meter network each consumption meter is directly assigned to a repeater. This direct assignment normally includes some manual handling, such as uploading lists, or performing some kind of pairing routine. In this manner the groups 110, 120 and 130 are assigned as illustrated in Fig. 1 to the first level repeaters 10, 11 and 12, respectively. The group 100 is assigned directly to the collector. Each of the repeaters 10, 11 and 12 are provided with lists of consumption meters from which they should act as repeaters.

Moreover, the repeaters 20, 30 and 40 are next level repeaters which have previous level repeaters assigned to them. A next level repeater need not have any consumption meter devices directly assigned to it, but may have.

To begin with, data signals transmitted by e.g. consumption meter 1A are repeated by the repeater 10 since the consumption meter is listed on the repeater's meter list. However, data signals transmitted from consumption meter 2A, and possibly received at repeater 10, are not repeated by the repeater, since the consumption meter is not on the repeater's meter list.

The second level repeater devices 20, 30 and 40 are instructed to obtain from the repeater devices assigned to them, the meter lists of these repeater devices to obtain repeater assigned meter lists. Repeater devices 20, 30 and 40 are in-direct repeater devices where the meter list comprises consumption meters obtained from other repeater devices assigned to the in-direct repeater device.

Repeater 20 is thus instructed to obtain the meter lists from repeaters 10 and 11, and include the obtained consumption meters on its own meter list. Repeater 20 end up with meter lists which include meters of the groups 110 and 120. The resulting meter list of repeater 30 is the same as that of repeater 20, and the meter list of repeater 40 includes the group 130.

A repeater may obtain the meter list of another repeater in different manners. In one embodiment, the repeater devices periodically broadcast their meter lists. By further instructing the repeater devices to listen for broadcasted meter lists from other repeater devices assigned to them, the meter lists can periodically be updated so that the repeaters update their meter list in accordance with the broadcasted meter list.

In an alternative embodiment, a repeater device requests a repeater device assigned to it, to transmit the meter list, and upon receipt of the requested meter list, update its meter list in accordance with the requested meter list.

An important advantage of embodiments of the present invention, is that if changes are made at the consumption meter level the repeater network automatically adapts to these changes.

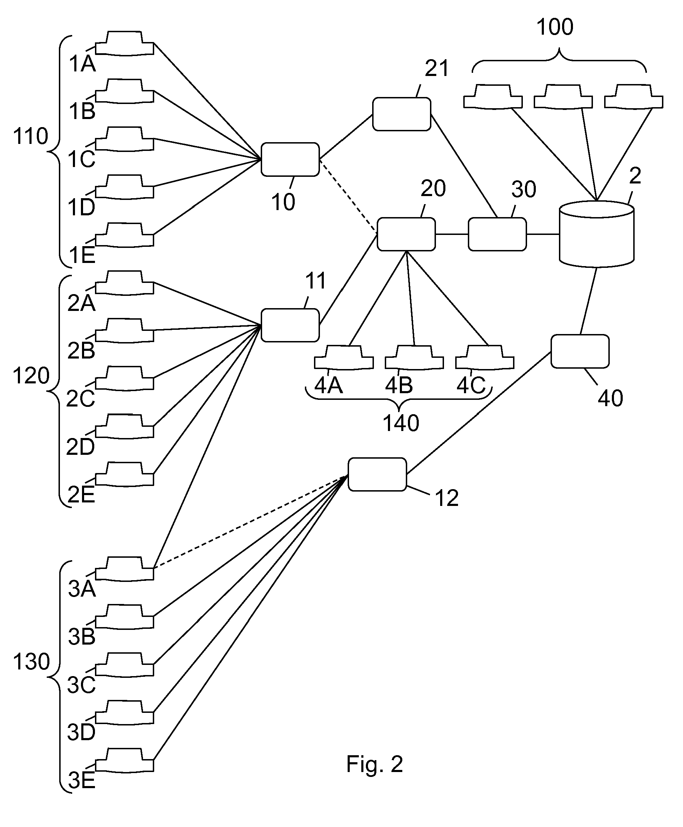

Figure 2 is a modified version of figure 1 which illustrates examples of changes at the consumption meter level. Such changes are automatically handled by the higher level repeaters to a very high degree.

In a first example, meter 3A may have an inferior signal quality at repeater 12 as compared to the signal quality at repeater 11. The direct assignment of the meter is therefore moved from the repeater 12 to the repeater 11. At a next meter list update at repeater 20, the repeater will add the meter to its meter list, whereas repeater 40 will remove the meter 3A from its list. Since next level meters are instructed to obtain repeater assigned meter lists, a rearrangement of directly assigned meters will automatically be incorporated in the meter lists of higher repeater levels.

In a second example, a new group of meters 140 is added to the network. The meters need to be directly assigned to the first level repeater, here repeater 20, however by virtue of the repeater assignments, the newly added meters are automatically added to the meter lists to higher level repeaters (here repeater 30) so that the communication path is automatically extended all the way to the collector 2.

In a third example, the addition of group 140 to repeater 20 is accompanied by the addition of repeater device 21. The newly added repeater is assigned to the repeater 30. At the same time, the repeater assignments of repeater 20 are changed by deleting the assignment of repeater 10 from repeater 20. This rearrangement of repeater assignment may require manual handling, e.g. by use of an assignment tool. In the course of reassigning repeater 10 from repeater 20 to repeater 21, the meter list of repeater 20 is updated to remove the consumption meters assigned to repeater 10 from its meter list. By virtue of the repeater assignment of repeater 10 to repeater 21, the repeater 21 is instructed to obtain the meter list of repeater 10 and add the consumption meters to its own meter list.

Repeater 30 already has listed the meters of group 110 on its meter list, thus in principle no change is needed, however, normally the repeater 30 will remove the meters of group 110 from its list when it learns that the group is no longer assigned to the repeater 20, however the group will be re-entered on the list when the consumption meters of repeater 21 is reported to the repeater 30.

A meter list may be based on a simple list with an assignment, e.g. the meter list of repeater 20 in the network topology of Fig. 1 may be

| Meter number | Assignment |
|---|---|
| 1A | Repeater 10 |
| 1B | Repeater 10 |
| 1C | Repeater 10 |
| 1D | Repeater 10 |
| 1E | Repeater 10 |
| 2A | Repeater 11 |
| 2B | Repeater 11 |
| 2C | Repeater 11 |
| 2D | Repeater 11 |
| 2E | Repeater 11 |

The list of repeater 20 is after the changes made to the network topology of Fig. 2 changed into:

| Meter number | Assignment |
|---|---|
| 4A | Direct |
| 4B | Direct |
| 4C | Direct |
| 2A | Repeater 11 |
| 2B | Repeater 11 |
| 2C | Repeater 11 |
| 2D | Repeater 11 |
| 2E | Repeater 11 |
| 3A | Repeater 11 |

Other forms of meter lists are naturally possible, and the above examples are purely shown for illustrative reasons.

There is often a desire to install repeater devices at locations without an electricity outlet in the vicinity, and the repeater devices are advantageously battery operated. In order to obtain a long battery life time, such as a battery life time of more than 5 years, or even more than 10 years, such as 16 years, there may be a need for implementing specific measures to keep the power consumption to an extremely low level.

In an embodiment, the power consumption is reduced by reducing the frequency of retransmissions. A consumption meter network may comprise a very high number of consumption meters, which each transmits consumption data as often 3 to 5 times pr. minute. While consumption meters may transmit their consumption data with such a high frequency for a number of reasons, there may be a desire to lower the repeater retransmission frequency in order to save power in the repeater devices. In an embodiment, the repeater devices are arranged to operate in inactive periods and in active periods. In an inactive period at least one of the receiver circuit and the sender circuit are powered down, or possibly shot off, so that power consumption is lowered during the inactive periods. In an active period the receiver circuit and the sender circuit operate normally to receive data messages and retransmit the data messages.

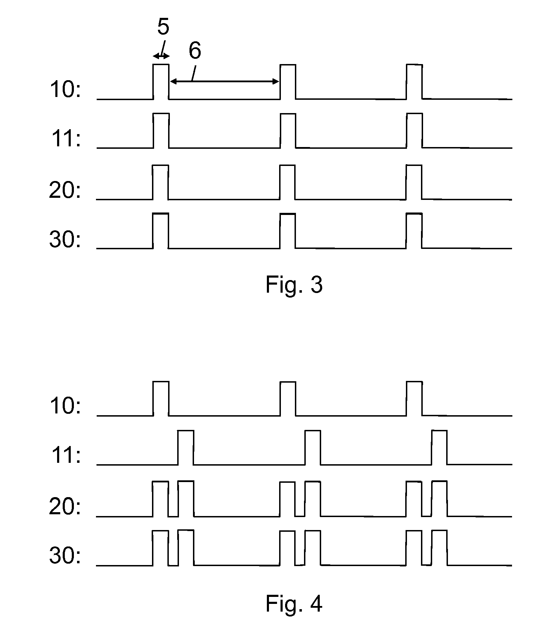

In a general embodiment, all repeater devices may be set to operate in the same time periods. This is illustrated in Fig. 3, with reference to the network topology of Fig. 1, where all repeater devices (repeater devices 10, 11, 20 and 30) are active in time slots 5, e.g. of 16 seconds, separated by inactive periods 6, e.g. of 15 minutes. Thus a repeater receiving a data signal at its receiver circuit will only during the active period 5 retransmit the data signal, and not in inactive periods. In this manner meter data are reported back every quarter of an hour, which may be sufficient for a given utility provider. Other time periods may be used in accordance with various requirements and/or desires. In general, the inactive time periods are as long as the active time periods, however typically the inactive time periods are longer, and even much longer than the active time periods.

In another embodiment, the active and inactive periods are not fixed on a network scale. For example, a repeater device can be set individually to operate in accordance with a given timing. In this situation, the repeater advantageously broadcast a timing message which specifies the timing of the inactive and the active periods of the repeater. By further instructing the repeater devices to receive timing messages from the repeater devices assigned to them, and to set their active periods so that a repeater device is active at least in the periods of the repeater devices assigned to it, a versatile repeater network can be provided.

Figure 4 illustrates timing signals of repeaters with reference to the network topology of Fig. 1, where the active periods of repeater devices 10 and 11 are shifted with respect to each other. Such a shift may be beneficial for collision reasons. Repeater 20, in order to be able to act as active repeater for both repeater 10 and 11, has two active periods, one for each of the active periods of the two repeaters 10 and 11. The active periods of repeater 30 are the same as the active period of repeater 20. In general the active periods of repeater 30 may be different from that of 20 if other repeaters with different timing were assigned to it. Individual active periods may further be combined to longer coherent active periods.

In Fig. 3 and 4, the active period of higher level repeaters are set to be identical to the active periods of previous level repeaters. In general, the active period of higher level repeaters may be set to be larger than the active period of the previous level repeaters to make sure that all signals transmitted by a repeater of a previous level is received by a repeater of the next level.

In a consumption meter network a high number of data messages are transmitted. To reduce the risk of data collision, the repeater device may in embodiments be arranged to operate with at least two communication channels. A first communication channel may be the channel used by the consumption meter for transmitting the consumption data to the first level receiver. This may be referred to as the primary channel.

In a general embodiment, all repeaters may be arranged to be able to receive data messages in a number of specified channels. In an embodiment, the repeater device advantageously broadcasts a channel message which specifies the transmission channel of at least the next transmission, e.g. the next active period, and wherein the repeater devices receive channel messages from the repeater devices assigned to them. Each repeater device may set its receiving circuit in accordance with the received channel message, and thereby provide a network where different communication channels are utilized at different locations in the network. Such a network may have a lower risk of data collisions.

In a situation where more than two repeaters comprises a given meter on their meter lists, for example in Fig. 1 repeaters 10, 20 and 30 will all comprise the meter 1A on their lists, there may be a risk of having a data signal trapped in a loop between two repeaters, since a data signal repeated by repeater 20 may be received by repeater 10, which repeats the data message to repeater 20, etc.

In an embodiment, a repeater device may store an identifier of a repeated data message. Upon receipt of a data signal, in addition to read out the meter ID, also an identifier of the data signal itself is extracted and only if the identifier of the data signal is different from any stored identifiers, the data messages is repeated, and otherwise disregarded.

The identifier of the data message may be a data frame number, a data packet number, a CRC value, or other values which distinguishes the data message from other data messages. The identifier may be a unique identifier, but need not be if the time between given repetitions of the identifier is such that only a single message is in the course of being transmitted in the network.

The present invention is directed to a communication network where at least an isolated part of the network consists of repeater devices to ensure a communication path between the consumption meters and the collectors.

A repeater device receives the data message by a receiver circuit and re-transmits the data message by a sender circuit. A wired repeater will normally repeat all signals received by the receiver since due to the wiring it can be assumed that all the received messages are intended for the repeater. A wireless transmitter normally needs to perform some kind of discrimination routine to make sure that the signals on the antenna results from a data message intended for the receiver. A wireless repeater therefore may perform such routines as detecting a preamble and a sync word prior to repeating the data message. The function of the repeater is to extend the communication path, however some kind of amplification, reshaping, retiming or similar functions may optionally also be performed.

In embodiments of the present invention, the repeater devices only operate on the physical layer or the link layer of the data message in accordance with the OSI model, as defined by the standard ISO/IEC 7498-1, and not on any higher lying OSI layers.

In connection with retransmission a marker bit may be set in the data message, and a new CRC check sum may be determined with such a marker bit. In order to use marker bits and be able to alter the CRC check sum, access to the link layer is needed. If such marker bits are not used, the repeater may operate only at the physical layer of the signal.

However, it is noted that not all communication protocols strictly adhere to the OSI layer model. For example the layers may be somewhat mixed up, e.g. by placing link layer information in the application layer. A repeater device may in such situation also operate on other layers, such as on the application layer. For example, a marker bit may be placed in the application layer even though it strictly speaking is link layer information.

In this manner, the repeater device, upon receipt of a data signal, extracts a meter ID and consults the stored meter list, and only if consumption meter is listed on the meter list the repeater device retransmit the data signal, and otherwise disregards the data signal. The meter ID may in an example be the meter number. The risk of multiple copies of the data message in the network is thereby removed or at least diminished.

While the presence of a meter list in each repeater removes or reduces the risk of multiple copies of data messages in the network, it introduces a need for creating and maintaining these lists. This may e.g. be done in a pairing process in connection with deployment of the network. Pairing of consumption meters with the relevant repeaters is a considerable task in connection with deployment and re-arrangement of a consumption meter network comprising two or more levels of repeaters.

In embodiments, the consumption meters may be operated as uni-directionally transmitting devices. Battery operated consumption meters may be uni-directionally transmitting devices in order to ensure a low power consumption. In general, however, the consumption meters may support bi-directional communication. The repeater network in accordance with embodiments of the present embodiment is not sensitive to whether or not uni-directional or bi-directional communication is used, since a repeater device will repeat a data signal if the consumption meter is on the meter list of the repeater. A repeater device in accordance to the present invention is not sensitive to the direction of the communication path.

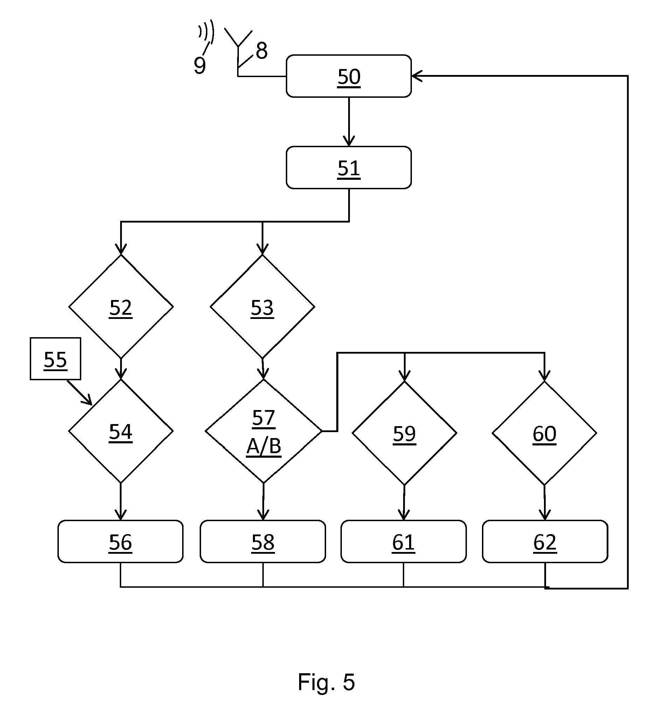

Figure 5 illustrates a flow chart of steps performed in connection with operating a repeater device in accordance with embodiment of the present invention. The figure is illustrated for a wireless repeater device equipped with an antenna 8 for receiving incoming RF signals 9. Not all steps are needed to be present, as well as other steps may be present for a different operation mode.

In preliminary steps, the repeater device is arranged to store the meter list 55 of consumption meters assigned to it. The meter list may be empty, in the event that any consumption meters are only indirectly assigned to the repeater via other repeaters. Moreover, the repeater device is arranged to store repeater assignments of one or more other repeater devices assigned to it. The list of repeater assignments may also be empty if the repeater is a first level repeater for all assigned consumption meters.

The repeater device is arranged to operate a receiver circuit to receive any incoming signals, thus the repeater device performs the step:
50: Detect and receive data signal

This step may include performing a discrimination routine, such as the detection of preambles and sync words, a signal may be defined to be received if the receiving circuit is capable of correctly extracting the preamble and the sync word.

In a next step, the repeater device is arranged to:
51: detect the type of data signal

In a basic embodiment, the repeater device is capable of detection a data signal of the types:
52: data signal originating from a consumption meter
53: data originating from a repeater

In the event the data signal originates from a consumption meter, the repeater device is arranged to:
54: consult meter list 55 and determine whether or not the data signal originates from meter on the meter list
if the consumption meter is on the meter list, then:
56: repeat the data list by retransmitting the data signal.

In the event that the data signal originates from a repeater 53,
57A: determined if the data signal originates from a repeater assigned to it

If this is the case, the repeater in the basic functionality will:
58: update the meter list 55 of the repeater device.

The meter list 55 is updated to comprise both the consumption meters assigned to it and the consumption meters obtained from the repeater assigned meter lists, in accordance with the received assigned meter list.

In further embodiments, the repeater can receive further signals from repeaters assigned to it.

Thus in the event that the data signal originates from a repeater 53,
57B: determined if the data signal originates from a repeater assigned to it, and the type of repeater signal

In embodiments, the repeater will be able to receive also:
59: timing signals and
60: channel signals:

And in dependence upon the type of signal:
61: set receiver circuit and sender circuit in accordance with timing signal
62: set receiver circuit and sender circuit in accordance with channel signal

In further embodiments of the present invention, the repeater device is arranged to periodically broadcast its meter list, periodically broadcast timing signals and periodically broadcast channel signals.

Although the present invention has been described in connection with the specified embodiments, it should not be construed as being in any way limited to the presented examples. The invention can be implemented by any suitable means; and the scope of the present invention is to be interpreted in the light of the accompanying claim set. Any reference signs in the claims should not be construed as limiting the scope.

## Claims

1. A system of a plurality of consumption meters each arranged for measuring consumption data of a supplied utility, and a data collector for collecting the consumption data arranged in a communication network where a data path between a consumption meter and the data collector comprises at least two repeater devices,
wherein a repeater device is arranged to repeat a data signal by receiving the data signal and retransmitting the data signal, where each repeater device stores a meter list of consumption meters assigned to it, and where the repeater device only repeats the data signals originating from a consumption meter comprised on the meter list stored by the repeater device,
wherein the repeater device may further have assigned to it one or more other repeater devices, and wherein the repeater device is arranged to obtain from the one or more other repeater devices the meter list of the one or more other repeater devices, thereby obtaining repeater assigned meter lists,
and wherein the meter list of the repeater devices comprises both the consumption meters assigned to it and the consumption meters obtained from the repeater assigned meter lists.

2. The system according to claim 1, wherein at least one of the at least two repeater devices is a direct repeater device where the meter list consists of consumption meters directly assigned to the repeater device, and at least one of the at least two repeater devices is an in-direct repeater devices where the meter list comprises consumption meters obtained from other repeater devices assigned to the in-direct repeater device.

3. The system according to claim 1, wherein a repeater device periodically broadcasts its meter list.

4. The system according to claim 3, wherein a repeater device listens for broadcasted meter lists from other repeater devices assigned to it, and upon receipt of a meter list from a repeater assigned to it, updates its meter list in accordance with the broadcasted meter list.

5. The system according to claims 1 or 2, wherein a repeater device requests a repeater device assigned to it, to transmit the meter list, and upon receipt of the requested meter list, update its meter list in accordance with the requested meter list.

6. The system according to any of the preceding claims, wherein the repeater device comprises a receiver circuit for receiving data signals and a sender circuit for re-transmitting the received data signal, and wherein the repeater device is arranged to operate with an inactive period where at least one of the receiver circuit and the sender circuit is inactive, and an active period where the receiver circuit and the sender circuit are active.

7. The system according to claim 6, wherein the repeater device broadcast a timing message which specifies the timing of the inactive and the active periods of the consumption meter.

8. The system according to claim 7, wherein the repeater device receives timing messages from the repeater devices assigned to it, and wherein the repeater device sets its active periods so that the repeater device is active at least in the periods of the repeater devices assigned to it.

9. The system according to any of the preceding claims, wherein the repeater device comprises a receiver circuit for receiving data signal and a sender circuit for re-transmitting the received data signal, and wherein the repeater device is arranged to operate with at least two communication channels.

10. The system according to claim 9, wherein the repeater device broadcast a channel message which specifies the transmission channel of at least the next transmission.

11. The system according to claim 10, wherein the repeater device receives channel messages from the repeater devices assigned to it, and wherein the repeater device sets the receiving circuit in accordance with the received channel message.

12. The system according to any of the preceding claims, wherein the repeater device stores an identifier of a repeated data signal, and where only data signal with an identifier different from any stored identifiers are repeated.

13. The system according to any of the preceding claims, wherein the repeater device operate on the physical layer or the link layer of the data signal in accordance with the OSI model.

14. A repeater device for repeating radio frequency signals by receiving a data signal and retransmitting the data signal, the repeater device stores a meter list of consumption meters assigned to it, and only the data signals originating from a consumption meter comprised on the meter list stored by the repeater device is repeated,
wherein the repeater device may further have assigned to it one or more other repeater devices, and wherein the repeater device is arranged to obtain from the one or more other repeater devices the meter list of the one or more other repeater devices, thereby obtaining repeater assigned meter lists,
and wherein the meter list of the repeater devices comprises both the consumption meters assigned to it and the consumption meters obtained from the repeater assigned meter lists.

15. A method of operating a repeater device to provide a data path between a consumption meter and a data collector in a communication network comprising at least two repeater devices, wherein the repeater device is arranged to perform the steps:
- store a meter list of consumption meters assigned to it,
- store repeater assignments of one or more other repeater devices assigned to it,
- receive a data signal,
- consult the stored meter list, and if the data signals originating from a consumption meter comprised on the meter list, repeat the data list by retransmitting the data signal,
wherein the repeater device may further perform the steps:
- obtain from the one or more other repeater devices the meter list of the one or more other repeater devices, thereby obtaining repeater assigned meter lists, and
- update the meter list of the repeater device to comprises both the consumption meters assigned to it and the consumption meters obtained from the repeater assigned meter lists.
